Europäisches Patentamt

European Patent Office

Office européen des brevets

(19)

(11) Numéro de publication : **0 008 987**
**B1**

(12)                    **FASCICULE DE BREVET EUROPÉEN**

(45) Date de publication du fascicule du brevet :
15.12.82

(51) Int. Cl.³ : **G 02 B   7/26**

(21) Numéro de dépôt : **79400621.3**

(22) Date de dépôt : **06.09.79**

(54) **Dispositif de centrage et procédé de fabrication d'un connecteur pour fibre optique.**

(30) Priorité : **12.09.78 FR 7826108**

(43) Date de publication de la demande :
**19.03.80 (Bulletin 80/06)**

(45) Mention de la délivrance du brevet :
**15.12.82 Bulletin 82/50**

(84) Etats contractants désignés :
**DE GB IT NL**

(56) Documents cités :
**FR A 2 344 036**
**FR A 2 363 123**

(73) Titulaire : **SOCAPEX**
**10 bis, quai Léon-Blum**
**F-92153 Suresnes (FR)**

(72) Inventeur : **Maisot, Christian**
**"Thomson-CSF" - SCPI 173, bid Haussmann**
**F-75360 Paris Cedex 08 (FR)**
Inventeur : **Badoz, Jean-Marie**
**"Thomson-CSF" - SCPI 173, bid Haussmann**
**F-75360 Paris Cedex 08 (FR)**

(74) Mandataire : **Favre, Maurice et al**
**"THOMSON-CSF" - SCPI 173, bid Haussmann**
**F-75379 Paris Cedex 08 (FR)**

Jouve, 18, rue St-Denis, 75001 Paris, France

Dispositif de centrage et procédé de fabrication d'un connecteur pour fibre optique

La présente invention concerne les connecteurs pour lignes de transmission par fibres optiques, dans lesquels les deux extrémités de fibres optiques à raccorder doivent être parfaitement alignées l'une par rapport à l'autre. L'invention porte particulièrement sur un embout grâce auquel la fibre est fixée dans le corps du connecteur, et le dispositif de centrage de la fibre à l'intérieur de cet embout.

Les fibres optiques utilisées pour la transmission de données à très grande vitesse comportent un cœur actif, de 40 à 60 microns de diamètre, protégé par une enveloppe extérieure, en verre ou en silice, d'un diamètre de l'ordre de 120 microns. Le raccordement entre les deux extrémités des fibres à connecter exige une très grande précision dans la position transversale des deux extrémités des fibres dans leurs embouts respectifs : l'expérience montre qu'une précision de 1 micron est nécessaire.

En outre, les fibres, dans le connecteur achevé, doivent entrer en contact par leurs extrémités, dans le but d'éviter la déperdition de lumière. Ce résultat est obtenu par un polissage de l'ensemble de l'extrémité du connecteur, et parachevé par une pellicule d'un liquide de transmission, qui sera incluse entre les deux faces planes des connecteurs. Or, pour être parfaite, cette opération de polissage nécessite que le métal du connecteur, le verre de la fibre optique et le matériau de l'embout soient sensiblement de même dureté : c'est la raison pour laquelle le polymère ou la colle utilisés pour fabriquer l'embout sont chargés de poudre de quartz ou de fibre de verre.

Les procédés de fabrication des embouts, connus actuellement, font appel au moulage, par injection ou par transfert, dans des moules très précis, puisque la fibre optique doit être centrée à 1 micron près. Mais la nature du produit injecté, chargé de poudre abrasive, fait que le moule s'use très rapidement et doit être chargé fréquemment — après 15 à 20 moulages — ce qui rend l'opération rédhibitoire du point de vue économique et industriel.

Le connecteur selon l'invention remplace l'embout usiné avec soin ou moulé dans un moule de précision par un embout métallique de moindre précision, dans lequel la fibre optique est positionnée avec une grande précision par des moyens simples et économiques, position dans laquelle elle est fixée par un polymère ou une colle chargée : l'embout métallique remplissant la fonction du moule, son usure n'intervient plus puisqu'il ne sert qu'une seule fois.

De façon plus précise, l'invention concerne un dispositif de centrage d'une fibre optique ainsi que le procédé de fabrication d'un connecteur pour fibre optique au moyen du dispositif de centrage tels que revendiqués dans les revendications 1 et 2.

L'invention sera mieux comprise au moyen des explications qui vont suivre, lesquelles s'appuient sur les figures jointes qui représentent :

la figure 1, un type d'embout plastique, selon l'art connu ;

la figure 2, un autre type d'embout, métallique, selon l'art connu ;

la figure 3, un connecteur selon l'invention ;

la figure 4, le schéma géométrique de centrage de la fibre optique dans l'embout ;

la figure 5, le schéma du montage mécanique de réalisation des connecteurs ;

la figure 6, un manchon de raccordement ;

la figure 7, un raccordement de connecteurs réalisés selon l'invention.

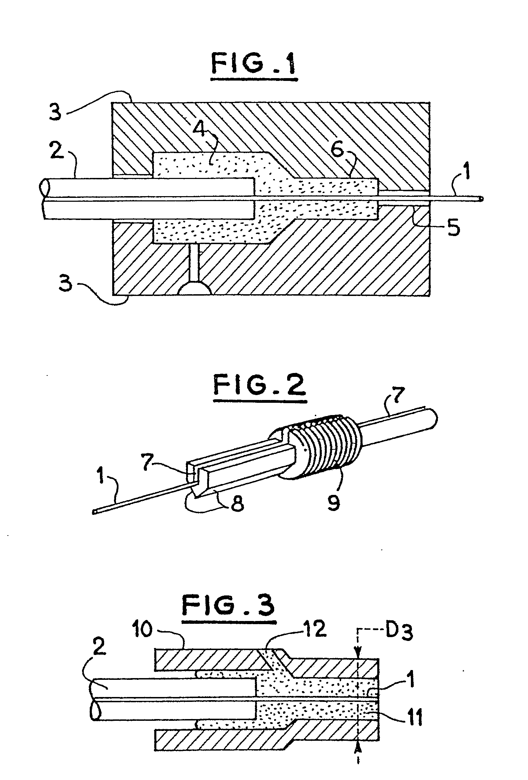

La figure 1 représente un embout plastique, selon l'art connu. Une fibre optique 1, protégée par une gaine plastique 2 est en position dans un moule 3, à la fin de l'opération de moulage de l'embout 4. Bien que le moule soit très simplifié sur ce schéma, il apparait que la fibre optique n'est parfaitement centrée que par la précision du canal de centrage 5 et du canon 6 du moule. Mais, en raison de l'érosion due aux particules dures qui chargent la résine de moulage de l'embout 4, la précision dans le centrage de la fibre optique n'est obtenue que par un changement fréquent du moule 3, très onéreux puisqu'il est usiné avec une grande précision.

La figure 2 montre un embout métallique, selon l'art connu. Ce type d'embout peut être utilisé seul, pour un raccordement fibre à fibre (il comporte alors un filetage 9 pour fixation avec un autre embout) ou en groupe, pour un raccordement de faisceau de fibres : il constitue alors l'embout de chaque fibre dans un connecteur multiple. Dans les deux cas, l'embout est constitué par une pièce métallique usinée avec précision, dans laquelle une rainure longitudinale 7 reçoit la fibre optique 1. La rainure 7 est ensuite obturée avec de la colle. Deux biseaux 8, longitudinaux, sont utilisés, au cours du montage, comme plans de référence d'abord pour l'usinage de la rainure 7, ensuite pour le positionnement de la fibre. Les petites dimensions de la pièce et la grande précision d'usinage rendent la pièce très coûteuse. En outre, et malgré ses petites dimensions, elle est très volumineuse par rapport à une fibre optique.

Ce n'est pas le cas de l'embout selon l'invention qui est petit, simple à fabriquer et peu onéreux.

La figure 3 représente un connecteur selon l'invention. La fibre optique 1 et sa gaine 2 sont maintenues centrées par rapport à l'embout métallique 10 par une injection de matière durcissable 11, polymère ou colle, pratiquée au moyen de l'orifice 12 situé sur une génératrice. L'originalité de cet embout réside dans le fait que la partie métallique extérieure 10 constitue le moule d'injection : ne servant qu'une seule fois, il n'est pas érodé par la masse chargée de poudre de quartz ou de verre, ce qui élimine la nécessité de son remplacement, onéreux. En outre, la fibre optique étant centrée par un procédé simple qui sera décrit ultérieurement, il suffit que l'embout extérieur 10 soit parfaitement régulier.

Selon l'invention, la précision du centrage d'une fibre optique est obtenue non plus par la précision d'usinage de chacun des embouts, mais grâce à la précision du dispositif utilisé pour le montage, résultat industriellement moins onéreux et de beaucoup plus simple à mettre en œuvre.

L'embout selon l'invention est représenté sur la figure 3, à titre non limitatif, comme étant un cylindre ayant un grand diamètre à une extrémité et un petit diamètre à l'autre extrémité. L'épaulement ainsi formé par la différence des diamètres a généralement une fonction de blocage longitudinal à la fibre, dans un connecteur complexe. Si le montage s'y prête, ou si un accroissement du diamètre de l'embout ne constitue pas un inconvénient, la partie métallique 10 de l'embout peut être un cylindre parfait, dont l'unique diamètre intérieur correspond à celui de la gaine 2. Cela simplifie encore la fabrication et abaisse le coût du connecteur.

En vue d'expliquer le procédé de centrage de la fibre de verre dans l'embout, il est nécessaire d'en exposer brièvement le fondement géométrique.

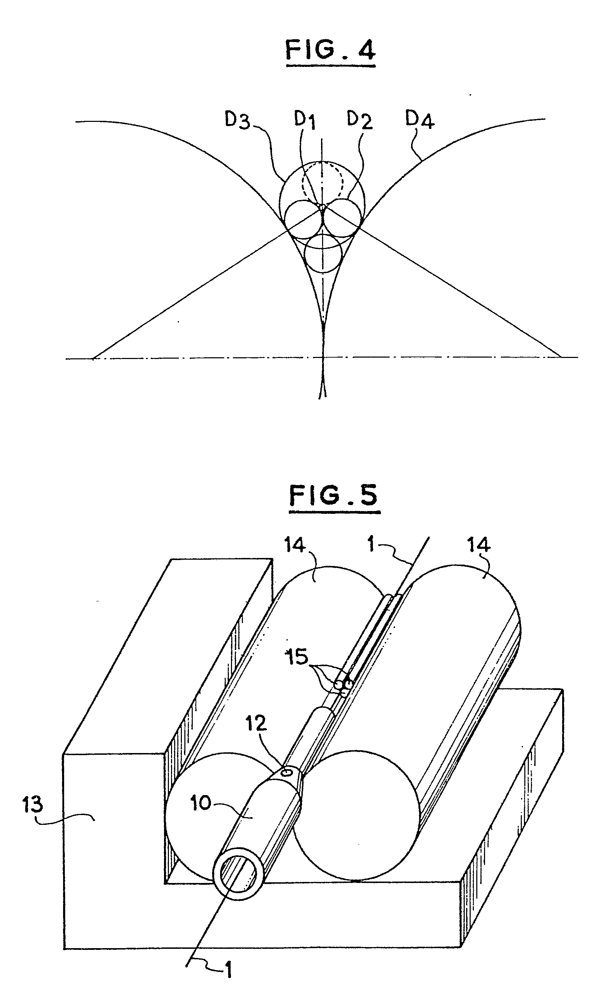

La figure 4 explique le centrage, géométriquement parfait, d'une fibre optique dans son embout métallique. Soit :

— D1 le diamètre extérieur de la fibre optique ;

— D2 le diamètre des trois cercles tangents entre eux et à la fibre optique ;

— D3 le diamètre extérieur utile de l'embout (voir figure 3) ;

— D4 le diamètre des cercles tangents entre eux et à l'embout.

La valeur de D1 est déterminée par la dimension du diamètre extérieur de la fibre optique, donc connue avec une très grande précision.

Ce diamètre D1 détermine les diamètres D2 des cercles qui sont tangents entre eux et à la fibre optique.

Le calcul donne $D2 = 6{,}463 \ D1$ (a) et $D3 = 2 \ (D1/2 + D2)$.

Ce qui donne pour les cercles de diamètres D4, tangents entre eux et à D3.

$D4 = 6{,}463 \ D3$ par la même relation que (a).

Soit, à titre d'exemple non limitatif, avec $D1 = 125$ microns, valeur couramment utilisée pour une fibre optique :

$D2 = 0{,}808$ mm
$D3 = 1{,}741$ mm
$D4 = 11{,}252$ mm.

Or, dans cet ensemble, les cercles de diamètres D1 et D3 ont leur centre rigoureusement confondu, donc l'axe de la fibre optique et l'axe de l'embout sont confondus.

Ainsi cette configuration permet de centrer parfaitement une fibre dans un embout.

Pour une application pratique, un montage simple constitué de cales calibrées permet de réaliser l'ensemble décrit en figure 4.

Il est aisé de se procurer des cylindres dont la précision sur le diamètre extérieur est très grande, de l'ordre du micron. En métrologie, ces cylindres ou cales calibrées, dénommés « piges », sont mêmes disponibles avec une précision garantie de l'ordre du dixième de micron, sur le diamètre.

La figure 5 montre le schéma du montage d'un embout sur une fibre optique, au moyen de piges.

Une pièce 13 est formée de deux plans parfaits formant entre eux un angle droit.

Deux grosses piges, identiques, 14, sont insérées dans cet angle et maintenues dans cette position par des moyens appropriés, tangentes entre elles.

Entre ces deux piges 14, trois petites piges 15, identiques, sont positionnées de telle sorte que l'une d'elles est tangente aux piges 14, les autres étant chacune tangente aux deux autres et à une pige 14.

Sur les piges 15 repose la fibre optique 1. Différents moyens mécaniques de pression permettent de maintenir les piges 14 dans l'angle droit, les piges 15 dans l'angle curviligne formé par les piges 14, et la fibre dans l'angle curviligne formé par les piges 15.

Un embout métallique 10 est alors positionné et maintenu de telle sorte que son diamètre D3 repose entre les piges 14.

La fibre est alors coaxiale avec l'embout, de façon rigoureuse.

Il suffit alors de figer cette configuration en injectant, par exemple, une résine ou autre produit polymérisable dans la partie creuse de l'embout, par l'orifice 12. On obtient alors la configuration schématisée en figure 3.

Après sciage, ou cassure de la fibre, obtenus par les moyens classiques, et polissage, on obtient donc un connecteur dans lequel la fibre optique est parfaitement centrée, avec une précision dépassant le micron.

L'alignement de deux fibres optiques, dans leurs embouts, pour constituer une connexion optique, se fait au moyen d'un manchon cylindrique, fendu d'une extrémité à l'autre, par une fente hélicoïdale.

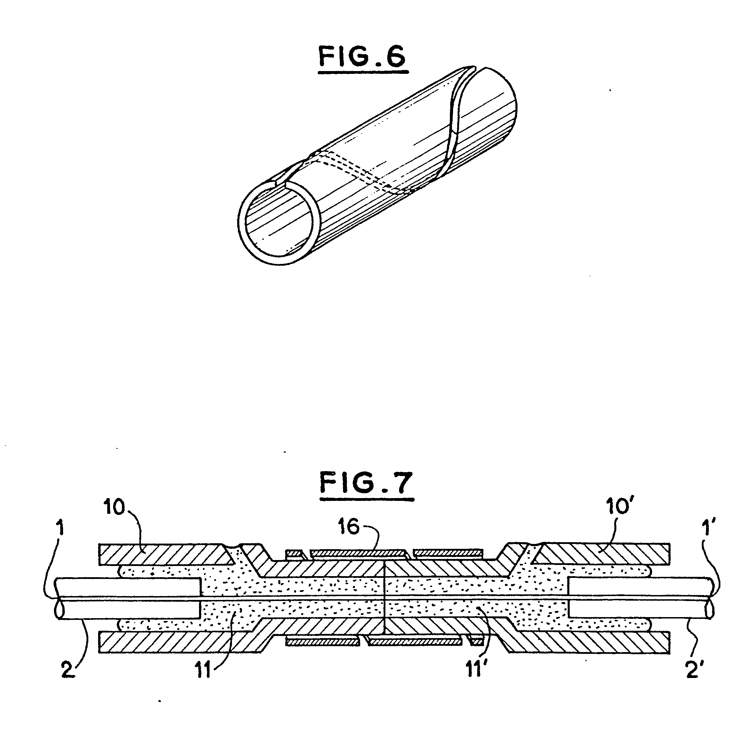

La figure 6 représente un tel manchon de raccordement. Sa forme spéciale permet au manchon de raccordement de se déformer de façon uniforme, en restant concentrique à lui-même, donc en maintenant alignées les deux fibres optiques. En effet, dans le cas où les deux connecteurs à aligner auraient une très légère différence de diamètre, il faut que le moyen de reconstitution puisse l'absorber. De plus, tout emmanchement démontable d'un cylindre dans un alésage doit comporter un jeu fonctionnel non négligeable.

Aussi cette forme permet l'ajustement sans jeu, par élasticité, des deux connecteurs à réunir. Ainsi cette méthode de réalisation permet d'assurer la continuité optique d'une ligne possédant un connecteur démontable avec des pertes faibles à chaque point de connexion.

De plus, chaque montage est très fiable, car la

colle chargée de particules de quartz ou de silice, qui est très abrasive, n'est jamais en contact avec le montage lui-même.

La figure 7 montre le système de connexion obtenu, pour raccorder une fibre optique 1 à une autre fibre optique 1', au moyen de deux embouts identiques 10 et 10' et d'un manchon de raccordement 16.

Quelle que soit la forme adoptée pour une réalisation préférée du connecteur selon l'invention, il demeure cependant que ce connecteur est de diamètre (inférieur à 2 mm) beaucoup plus petit que les connecteurs métalliques existants, ce qui autorise une grande densité de connexion, d'une réalisation simple due à un dispositif de centrage et à un procédé de fabrication simples, et d'un coût peu onéreux.

Le connecteur selon l'invention, décrit dans le cas du raccordement de deux fibres optiques, est utilisable, ainsi que son procédé de fabrication, dans le cas où une pluralité de fibres optiques sont raccordées deux à deux, à l'intérieur d'un boîtier de connecteur multiple.

### Revendications

1. Dispositif de centrage d'une fibre optique (1) de diamètre D1 dans un embout cylindrique (10) de diamètre extérieur D3, caractérisé en ce qu'il est constitué de :
— trois petits cylindres identiques (15) de diamètre D2 tangents l'un à l'autre et tels que D2 = 6,463 D1 ;
— deux gros cylindres (14) identiques de diamètre D4, tangents entre eux et tels que D4 = 6,463 D3 ;
lesdits trois petits cylindres (15) étant disposés dans l'angle curviligne supérieur formé par les deux gros cylindres (14) de manière telle que l'un des petits cylindres de diamètre D2 soit à la fois tangent aux deux gros cylindres et aux deux autres petits cylindres alors que chacun des deux autres petits cylindres n'est tangent qu'à un seul des gros cylindres et que les diamètres D1, D2, D3 sont liés par la relation D3 = 2 (D1/2 + D2).

2. Procédé de fabrication d'un connecteur pour fibre optique au moyen du dispositif de centrage et de l'embout selon la revendication 1, caractérisé par la suite des opérations suivantes :
— disposition de l'embout (10) dans l'angle curviligne formé par les deux gros cylindres (14) de manière à ce qu'il soit simultanément tangent à chacun d'eux ;
— introduction de l'extrémité dénudée d'une fibre optique (1) à travers l'embout (10) de manière à ce qu'elle soit maintenue tangente à deux des petits cylindres (15) dans l'angle curviligne qu'ils forment ;
— injection d'une matière durcissable, telle que polymère ou colle, chargée de particules dures, telles que poudre de quartz ou de verre, dans l'embout (10) à travers un orifice d'injection (12), pratiqué dans la paroi de l'embout, figeant ainsi la fibre dans une position parfaitement concentrique à l'embout ;
— sciage de la fibre, et polissage de la surface de l'embout et de la fibre destinée à la connexion avec une autre fibre.

### Claims

1. A device for centering an optical fibre (1) having a diameter D1 in a cylindrical ferrule (10) having an outer diameter D3, characterized in that it comprises :
— three identical small cylinders (15) having a diameter D2, mounted tangentially with respect to each other and being so selected that D2 = 6.463 D1 ;
— two identical large cylinders (14) having a diameter D4, mounted tangentially with respect to each other and being so selected D4 = 6.463 D3 ;
with the said three small cylinders (15) being placed in the upper curvilinear angle formed by said two large cylinders (14), in such a way that one of the small cylinders having said diameter D2 is tangent as well to said two large cylinders as to the other two small cylinders, whereas each one of the two other small cylinders in tangent only to one of the large cylinders, while said diameters D1, D2, D3 and D4 correspond to the relation D3 = 2 (D1/2 + D2).

2. A method of manufacturing an optical fibre connector by means of the centering device according to claim 1, characterized in that it comprises the successive steps of :
— placing a ferrule (10) into the curvilinear angle formed by said two large cylinders (14), in such a manner that it is tangent to both of them ;
— introducing the stripped end of an optical fibre (1) through said ferrule in such a manner that said end is maintained in a position tangential to two of said small cylinders (15) in the curvilinear angle formed by the latter ;
— injecting a hardenable substance, such as a polymer or glue containing a particulate filler material such as quartz or glass, through an injection orifice (12) provided in the wall of said ferrule, whereby the fibre is rigidly maintained in a position perfectly concentric with the ferrule ;
— sawing the fibre, and polishing the surface of the ferrule and the fibre, which is to be connected to another fibre.

### Ansprüche

1. Vorrichtung zum Zentrieren eines Lichtleiters (1) mit einem Durchmesser D1 in einer zylindrischen Steckermuffe (10) mit einem Aussendurchmesser D3, dadurch gekennzeichnet, dass sie folgende Bestandteile umfasst :
— drei kleine, einander identische Zylinder (15) mit einem Durchmesser D2, die in bezug aufeinander tangential angeordnet und derart gestaltet sind, dass D2 = 6,463 D1 ;
— zwei grosse, einander identische Zylinder (14) mit einem Durchmesser D4, die in bezug aufeinander tangential angeordnet und derart gestaltet sind, dass D4 = 6,463 D3 ;

wobei die drei kleinen Zylinder (15) in dem oberen, durch die beiden grossen Zylinder (14) gebildeten krummlinigen Winkel angeordnet sind, derart, dass einer der kleinen Zylinder mit dem Durchmesser D2 gleichzeitig in bezug auf die beiden grossen Zylinder und in bezug auf die beiden anderen kleinen Zylinder tangential liegt, während jeder der beiden anderen kleinen Zylinder nur in bezug auf einen der grossen Zylinder tangential liegt und die Durchmesser D1, D2, D3 der Gleichung D3 = 2 (D1/2 + D2) entsprechen.

2. Verfahren zur Herstellung eines Lichtleiter-Verbindungs-Stücks vermittels der Zentriervorrichtung nach Anspruch 1, gekennzeichnet durch folgende Verfahrensschritte :

— Anbringen einer Steckermuffe (10) in dem durch die beiden grossen Zylinder (14) gebildeten krummlinigen Winkel, derart, dass sie gleichzeitig in bezug auf diese Zylinder tangential in dem durch dieselben gebildeten krummlinigen Winkel liegt ;

— Einführen des abgemantelten Endes eines Lichtleiters (1) durch die Steckermuffe (10) hindurch, derart dass es in bezug auf zwei der kleinen Zylinder (15) tangential in dem durch dieselben gebildeten krummlinigen Winkel gehalten wird ;

— Einspritzen eines härtbaren Materials, wie Polymer oder Leim mit harten Füllstoffteilchen, wie Quartz oder Glasteilchen, in die Steckermuffe (10) durch eine in der Wandung vorgesehene Einspritzöffnung (12) hindurch, wodurch der Lichtleiter starr in einer zur Stechermuffe genau konzentrischen Lage gehalten wird ;

— Absägen des Lichtleiters, sowie Polieren der Steckermuffenoberfläche und der Lichtleiteroberfläche, die mit einem anderen Lichtleiter verbunden werden soll.

## FIG.1

## FIG.2

## FIG.3

## FIG. 4

## FIG. 5

## FIG.6

## FIG.7